# EUROPEAN PATENT SPECIFICATION

(11) **EP 3 132 670 B1**
(45) Date of publication and mention of the grant of the patent: **28.04.2021**
(21) Application number: 16185208.2
(22) Date of filing: 22.08.2016
(51) Int. Cl.: A01F 12/44, A01D 41/127, A01D 75/28

(54) **SIDE SHAKE RATE BASED ON MACHINE THROUGHPUTS**
QUERSCHÜTTELRATE IN ABHÄNGIGKEIT DES MASCHINENDURCHSATZES
VITESSE DE VIBRATION TRANSVERSAL DÉPENDANT DU DÉBIT

(30) Priority: 20.08.2015 US 201562207766 P; 20.08.2015 US 201562207691 P
(43) Date of publication of application: 22.02.2017
(73) Proprietor: CNH Industrial Belgium nv, 8210 Zedelgem (BE)
(72) Inventor: Reinecke, Clay, Blue Grass, Iowa 52726 (US)
(74) Representative: CNH Industrial IP Department

(56) References cited:
- EP-A1- 1 584 225
- EP-A1- 1 609 352
- DE-A1-102004 023 767
- US-A1- 2013 158 816
- US-A1- 2015 080 070

## Description

### BACKGROUND OF THE INVENTION

The present invention relates to agricultural harvesters such as combines, and, more particularly, to sieve assemblies incorporated in the harvester crop processing section having the capability for side to side shaking motion.

An agricultural harvester known as a "combine" is historically termed such because it combines multiple harvesting functions with a single harvesting unit, such as picking, threshing, separating and cleaning. A combine includes a header which removes the crop from a field, and a feeder housing which transports the crop matter into a threshing rotor. The threshing rotor rotates within a perforated housing, which may be in the form of adjustable concaves, and performs a threshing operation on the crop to remove the grain. Once the grain is threshed it falls through perforations in the concaves and is transported to a grain pan. From the grain pan the grain is cleaned using a cleaning system, and is then transported to a grain tank onboard the combine. The cleaning system includes a cleaning fan which blows air through oscillating sieves to discharge chaff and other debris toward the rear of the combine. Non-grain crop material such as straw from the threshing section proceeds through a straw chopper and out the rear of the combine. When the grain tank becomes full, the combine is positioned adjacent a vehicle into which the grain is to be unloaded, such as a semi-trailer, gravity box, straight truck, or the like; and an unloading system on the combine is actuated to transfer the grain into the vehicle.

More particularly, a rotary threshing or separating system includes one or more rotors which can extend axially (front to rear) or transversely within the body of the combine, and which are partially or fully surrounded by a perforated concave. The crop material is threshed and separated by the rotation of the rotor within the concave. Coarser non-grain crop material such as stalks and leaves are transported to the rear of the combine and discharged back to the field. The separated grain, together with some finer non-grain crop material such as chaff, dust, straw, and other crop residue are discharged through the concaves and fall onto the grain pan where they are transported to the cleaning system. Alternatively, the grain and finer non-grain crop material may also fall directly onto the cleaning system itself.

The cleaning system further separates the grain from non-grain crop material, and typically includes a fan directing an air flow stream upwardly and rearwardly through vertically arranged sieves which oscillate in a fore and aft manner. The air flow stream lifts and carries the lighter non-grain crop material towards the rear end of the combine for discharge to the field. Clean grain, being heavier, and larger pieces of non-grain crop material, which are not carried away by the air flow stream, fall onto a surface of an upper sieve (also known as a chaffer sieve or sieve assembly) where some or all of the clean grain passes through to a lower sieve (also known as a cleaning sieve). Grain and non-grain crop material remaining on the upper and lower sieves are physically separated by the reciprocating action of the sieves as the material moves rearwardly. Any grain and/or non-grain crop material remaining on the top surface of the upper sieve or sieve assembly are discharged at the rear of the combine. Grain falling through the lower sieve lands on a bottom pan of the cleaning system, where it is conveyed forwardly toward a clean grain auger. The clean grain auger is positioned below the lower sieve, and receives clean grain from each sieve and from the bottom pan of the cleaning system. The clean grain auger then augers the clean grain laterally sideways to a clean grain elevator, which in turn conveys the clean grain to a grain tank onboard the combine.

The upper sieve or sieve assembly is driven in fore and aft movement to move the harvested crop material in an aft direction and at the same time to separate the remaining grain or crop from the non-crop material. When the agricultural harvester is on the side of a slope, side to side movement of the sieve assembly is required so as to prevent downhill pooling of the material and resultant reduction in capacity and/or efficiency by evenly distributing the material across the sieve assembly. The side to side movement is used generally selectively so that the continuous primary movement is fore and aft. Further, the side to side movement is often adjustable in preset increments. For example, 3 millimeters of side to side movement per degree of lateral side slope inclination may be chosen as a recommended setting for small seeds. 2.5 millimeters per degree may be recommended for medium sized seeds. 2 millimeters per degree may be recommended for large sized seeds. These settings may be based on an assumption that the agricultural harvester will be operating at its maximum capacity for the crop being processed, limited by the power limit of the agricultural harvester. Alternately, the same settings may be used for all crops, irrespective of seed size.

However, in practice, it is often not feasible or necessary to continuously utilize these amounts of side to side movement of the sieve assembly, not only due to variations in the amount of side slope being experienced by the agricultural harvester, but also because the amount of crop being processed at a given moment may not require the maximum capacity of the agricultural harvester. Specifically, the amount of crop being processed may change as the agricultural harvester proceeds, as it passes through areas of greater or lesser yields.

In other words, a certain amount of side to side movement of the sieve assembly is necessary to prevent downhill pooling of the crop material and resultant reduction in capacity and/or efficiency at a given amount of side slope when the agricultural harvester is operating at its maximum capacity for the crop being processed. However, when the agricultural harvester is not in fact operating at its maximum capacity, continuous use of the amount of side to side movement necessary at maximum capacity results in unnecessary damage to components, including wear and tear on the sieve assembly and on the side shaker mechanism that is used to cause the side to side movement.

DE 10 2004 023 767 A1 discloses a side shaker system with a controller that is operable to automatically proportionally increase the side to side shaking mechanism according to the lateral distribution of the material.

Accordingly, what is needed in the art is a system or method that automatically adjusts the amount of side to side shaking motion of the sieve assembly according to the amount of crop being processed at a given moment under a given amount of side slope.

### SUMMARY OF THE INVENTION

The present invention provides such a way to automatically adjust the amount of side to side shaking motion of the sieve assembly of a cleaning system of an agricultural harvester based on the amount of crop being processed at a given moment under a given amount of side slope. In this way, the amount of side to side shaking motion is limited to only the amount necessary for the cleaning system to function properly, thereby limiting stress and damage to components, including wear and tear on the sieve assembly and on the side shaker mechanism that is used to cause the side to side movement.

The present invention may allow an operator to configure parameters of the proportionate calculation used to determine the amount of side to side shaking motion as a function of the amount of crop being processed. Alternately, the present invention may allow an operator to choose between predefined proportionate calculations. Still alternately, the proportionate calculation may use a pre-configured algorithm set by the manufacturer of the agricultural harvester, according to the results of functional testing. The present invention may utilize a linearly proportionate relationship between the amount of crop being processed and the amount of side to side shaking motion, or may utilize a non-linear proportionate relationship between the amount of crop being processed and the amount of side to side shaking motion.

In one form, the invention is directed to an agricultural harvester having a chassis carrying a header for gathering a crop. The header is removably attached to a feeder housing for feeding the crop into the agricultural harvester to be processed. A threshing and separating system is connected to the feeder housing for separating grain from Material Other than Grain (MOG). A grain cleaning system is connected to the threshing and separating system for further cleaning the separated grain. The grain cleaning system has at least one sieve operable to oscillate fore and aft and a side shaker mechanism operable to produce a side to side shaking motion in the at least one sieve. A control system is connected to the side shaker mechanism and operable to automatically proportionately increase an amount of the side to side shaking motion as a function of an amount of crop being processed and a type of crop being processed. The automatic proportionate increase of said amount of said side to side shaking motion has a linear or non-linear relationship with the amount of crop being processed.

In another form, the invention is directed to a method of controlling an agricultural harvester. The agricultural harvester has a chassis carrying a header for gathering a crop. The header is removably attached to a feeder housing for feeding the crop into the agricultural harvester. A threshing and separating system is connected to the feeder housing for separating grain from MOG. A grain cleaning system is connected to the threshing and separating system for further cleaning the separated grain. The grain cleaning system has at least one sieve being operable to oscillate fore and aft and a side shaker mechanism operable to produce a side to side shaking motion in the at least one sieve. The method includes several steps. The first step is providing a control system connected to the side shaker mechanism. The second step is automatically proportionately increasing an amount of the side to side shaking motion as a function of an amount of crop being processed and a type of crop being processed. The automatic proportionate increase of said amount of said side to side shaking motion has a linear or non-linear relationship with the amount of crop being processed.

An advantage of the present invention is that it takes into account the specific requirements of the amount of crop being processed by the cleaning system in terms of the amount of side to side shaking motion that is required in the sieve assembly in order to prevent downhill pooling of the crop material and reduction in capacity and/or efficiency as a result of side slope. Another advantage of the present invention is that it minimizes the use of side to side shaking motion of the sieve assembly to an effective amount, in order to reduce unnecessary wear and tear on mechanical components.

Another advantage of the present invention is that it does not rely on the operator to determine the needed settings of side to side shaking motion required in the sieve assembly as a function of the amount of crop being processed or as a function of side slope.

### BRIEF DESCRIPTION OF THE DRAWINGS

The above-mentioned and other features and advantages of this invention, and the manner of attaining them, will become more apparent and the invention will be better understood by reference to the following description of an embodiment of the invention taken in conjunction with the accompanying drawings, wherein:
Fig. 1 is a side view of an embodiment of an agricultural harvester in the form of a combine which includes an embodiment of the present invention;
Fig. 2 is a perspective view of a sieve assembly used in an embodiment of the present invention; and
Fig. 3 is graphic representation of a proportionate calculation used by an embodiment of the present invention.

Corresponding reference characters indicate corresponding parts throughout the several views. The exemplification set out herein illustrates an embodiment of the invention, in one form, and such exemplification is not to be construed as limiting the scope of the invention in any manner.

### DETAILED DESCRIPTION OF THE INVENTION

The terms "grain", "straw" and "tailings" are used principally throughout this specification for convenience but it is to be understood that these terms are not intended to be limiting. Thus "grain" refers to that part of the crop material which is threshed and separated from the discardable part of the crop material, which is referred to as non-grain crop material, MOG or straw. Incompletely threshed crop material is referred to as "tailings". Also the terms "forward", "rearward", "left" and "right", when used in connection with the agricultural harvester and/or components thereof are usually determined with reference to the direction of forward operative travel of the harvester, but again, they should not be construed as limiting. The terms "longitudinal" and "transverse" are determined with reference to the fore-and-aft direction of the agricultural harvester and are equally not to be construed as limiting.

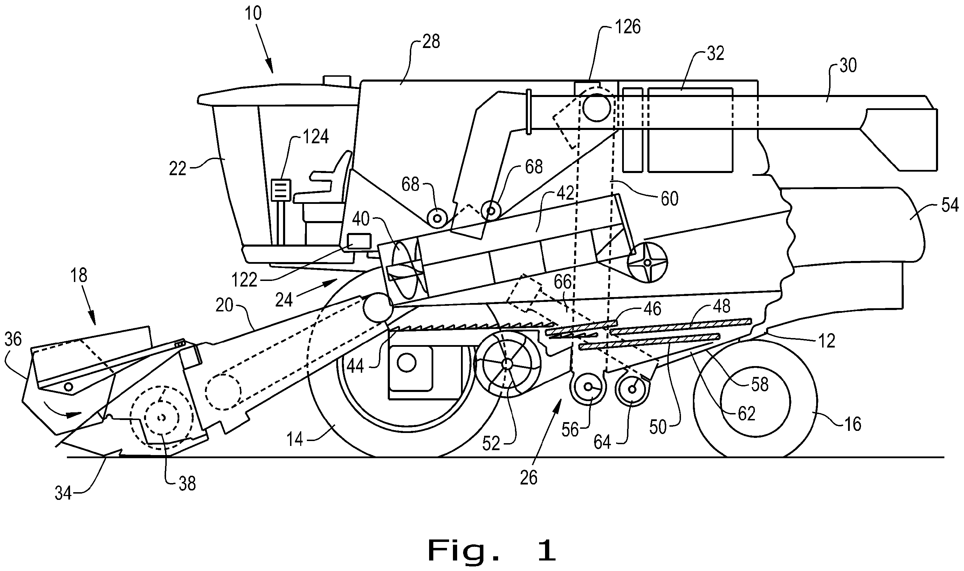

Referring now to the drawings, and more particularly to Fig. 1, there is shown an agricultural harvester in the form of a combine 10, which generally includes a chassis 12, ground engaging wheels 14 and 16, header 18, feeder housing 20, operator cab 22, threshing and separating system 24, cleaning system 26, grain tank 28, and unloading auger 30. The combine 10 is provided with a control system 122 and a combine monitor 124.

Front wheels 14 are larger flotation type wheels, and rear wheels 16 are smaller steerable wheels. Motive force is selectively applied to front wheels 14 through a power plant in the form of a diesel engine 32 and a transmission (not shown). Although combine 10 is shown as including wheels, it is also to be understood that combine 10 may include tracks, such as full tracks or half tracks.

Header 18 is mounted to the front of combine 10 and includes a cutter bar 34 for severing crops from a field during forward motion of combine 10. A rotatable reel 36 feeds the crop into header 18, and a double auger 38 feeds the severed crop laterally inwardly from each side toward feeder housing 20. Feeder housing 20 conveys the cut crop to threshing and separating system 24, and is selectively vertically movable using appropriate actuators, such as hydraulic cylinders (not shown).

Threshing and separating system 24 is of the axial-flow type, and generally includes a rotor 40 at least partially enclosed by and rotatable within a corresponding perforated concave 42. The cut crops are threshed and separated by the rotation of rotor 40 within concave 42, and larger elements, such as stalks, leaves and the like are discharged from the rear of combine 10. Smaller elements of crop material including grain and non-grain crop material, including particles lighter than grain, such as chaff, dust and straw, are discharged through perforations of concave 42. Threshing and separating system 24 can also be a different type of system, such as a system with a transverse rotor rather than an axial rotor, etc.

Grain which has been separated by the threshing and separating assembly 24 falls onto a grain pan 44 and is conveyed toward cleaning system 26. Cleaning system 26 may include an optional pre-cleaning sieve 46, an upper sieve 48 (also known as a chaffer sieve or sieve assembly), a lower sieve 50 (also known as a cleaning sieve), and a cleaning fan 52. Grain on sieves 46, 48 and 50 is subjected to a cleaning action by fan 52 which provides an air flow through the sieves to remove chaff and other impurities such as dust from the grain by making this material airborne for discharge from straw hood 54 of combine 10. Grain pan 44 and pre-cleaning sieve 46 oscillate in a fore-to-aft manner to transport the grain and finer non-grain crop material to the upper surface of upper sieve 48. Upper sieve 48 and lower sieve 50 are vertically arranged relative to each other, and likewise oscillate in a fore-to-aft manner to spread the grain across sieves 48, 50, while permitting the passage of cleaned grain by gravity through the openings of sieves 48, 50.

Clean grain falls to a clean grain auger 56 positioned crosswise below and toward the front of lower sieve 50. Clean grain auger 56 receives clean grain from each sieve 48, 50 and from bottom pan 58 of cleaning system 26. Clean grain auger 56 conveys the clean grain laterally to a generally vertically arranged grain elevator 60 for transport to grain tank 28. Tailings from cleaning system 26 fall to a tailings auger trough 62. The tailings are transported via tailings auger 64 and return auger 66 to the upstream end of cleaning system 26 for repeated cleaning action. A pair of grain tank augers 68 at the bottom of grain tank 28 convey the clean grain laterally within grain tank 28 to unloading auger 30 for discharge from combine 10. A yield monitor 126 may monitor the flow of grain proceeding from the cleaning system 26 into the grain tank 28, and may be connected to the control system 122 and/or to the combine monitor 124.

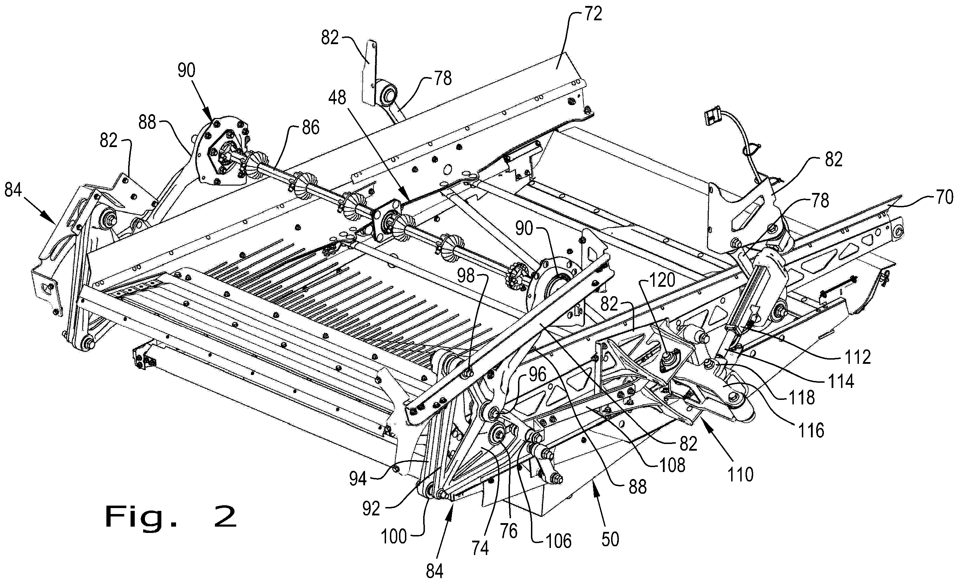

Referring now to Fig. 2, the upper and lower sieves or sieve assemblies 48 and 50 are shown. The upper sieve assembly 48 includes a left rail or frame 70 and a right rail or frame 72 interconnected by a cross frame 74. The right and left frames 70 and 72 are supported at the cross frame 74 by a front pivot support 76. A flexible link 78 connects to a rear support to maintain the rear of the rails in place. Support frames 82 provide a base affixed to the chassis 12 to provide ultimate support for the sieve assembly 48. A sieve extends between right and left frames 70 and 72 to provide a surface for carrying material in an aft direction and permit grain or other crop material to drop through and be collected. The sieve is not shown to enable a clearer description of the present invention.

The front of the right and left frames 70 and 72 are mounted for fore and aft movement through a fore and aft oscillation mechanism generally indicated at 84. An input drive shaft 86 extending transverse in chassis 12 receives a suitable power input for rotation. Both ends of drive shaft drive 86 reciprocate arms 88 through eccentric mountings 90. Arm 88 connects to a first frame 92 through a pivotal connection 96. A pivotal mounting 98 supported by frame 82 mounts the first frame 92 and a second frame 94 adjacent to it in radially inward from the first frame 92. A frame interconnection 100 connects the first and second frames 92 and 94. A pivotal connection 106 on first frame 92 connects with a link 108 that drives the lower sieve 50 for reciprocating movement.

The right and left frames 70 and 72 are selectively reciprocated from side to side by a side shaker mechanism generally indicated at 110. The mechanism includes a reciprocating electric actuator 112 appropriately mounted to frame 82 and having an output shaft 114 connecting to a linkage 116 by a pivotal input connection 118. The linkage 116 is pivotally connected to the frame 82 at 120, and serves to translate the reciprocating motion of the reciprocating electric actuator 112 into side to side shaking motion of the upper sieve 48 and lower sieve 50.

The amount of side to side shaking motion of the upper sieve 48 and lower sieve 50 produced by the side shaker mechanism 110 may be varied by the control system 122 of the combine 10. Generally, it is desirable to utilize the minimum amount of side to side shaking motion for a given degree of side slope on which the combine 10 is situated that will still allow the upper sieve 48 and lower sieve 50 of the cleaning system 26 to function properly, due to increased accelerations and forces in the cleaning system 26, which lead to faster degradation of machine components. Also, by using less side to side shaking motion per degree of incline, the side shaker mechanism 110 will accommodate steeper side slopes, due to the finite space available between either side of the sieve assembly 48 and the chassis 12.

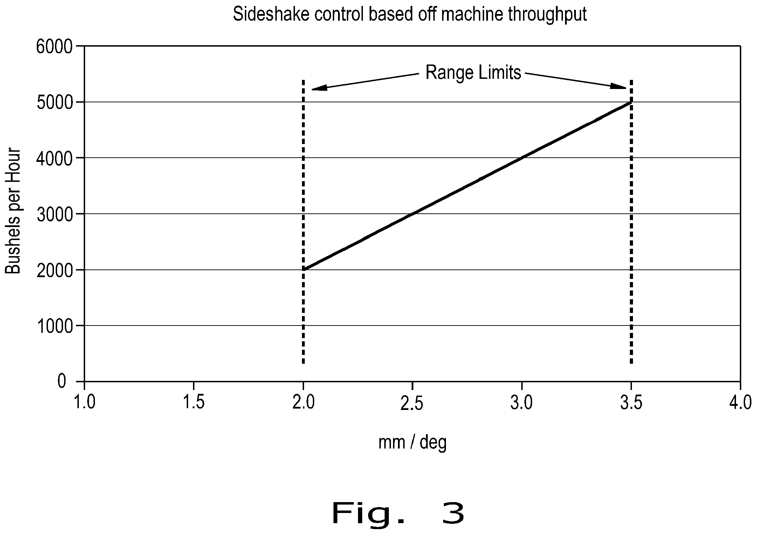

This side to side shaking motion is measured in millimeters of sideways motion per degree (mm/deg) of lateral side slope inclination of the upper sieve 48 and lower sieve 50 of the cleaning system 26. In order to utilize a minimum amount of this side to side shaking motion for a given degree of side slope on which the combine 10 is situated that will still allow the upper sieve 48 and lower sieve 50 of the cleaning system 26 to function properly, the control system 122 may utilize the yield monitor 126 to determine the current amount of crop being processed by the cleaning system 26 of the combine 10. As shown in Fig. 3, the control system 122 then uses a proportionate calculation within range limits to automatically adjust the amount of side to side shaking motion of the cleaning system 26 as a function of the amount of crop being processed.

In the example shown in Fig. 3, the control system 122 is configured to utilize a minimum of 2.0 mm/deg of side to side shaking motion up to 2000 bushels per hour of crop being processed by the cleaning system 26 of the combine 10. As the amount of crop being processed increases, the control system 122 increases the side to side shaking motion at a rate of 0.5 mm/deg per thousand bushels per hour, up to a maximum of 3.5 mm/deg at 5000 bushels per hour. Further, the parameters of the proportionate calculation may be fully configurable by the operator of the combine 10, using the combine monitor 124 connected to the control system 122, or by way of other input device, such as a rotatable knob (not shown).

Configurable parameters of the proportionate calculation may include the minimum amount of side to side shaking motion, the maximum amount of side to side shaking motion, the amount of crop being processed at which the amount of side to side shaking motion is to begin to increase, the amount of crop being processed at which the amount of side to side shaking motion is to stop increasing, and/or the slope of the line representing the proportion between the amount of crop being processed and the amount of side to side shaking. The range limits may or may not remain constant for different types of crops or grains, although the throughput of the agricultural harvester in bushels per hour continues to change, so that the slope of the line representing the proportion between the amount of crop being processed and the amount of side to side shaking may change. In other words, the proportionate calculation may depend upon or be specific to crop type.

In the case of a simplified input, the selection may be made by an operator between predefined proportionate calculations. For example, a "trim" knob (not shown) may be placed in the cab 22 of the combine 10 that controls how aggressive the side to side shaking motion is, so that, for example, a "low" setting may result in a minimum of 1.0 mm/deg of side to side shaking motion up to 1000 bushels per hour and a maximum of 2.5 mm/deg of side to side shaking motion at 4000 bushels per hour. A "medium" setting would then result in a minimum of 1.5 mm/deg of side to side shaking motion up to 1500 bushels per hour and a maximum of 3.0 mm/deg of side to side shaking motion at 4500 bushels per hour. A "high" setting would result in the settings as shown in Fig. 3. These "low", "medium", and "high" parameters are exemplary, and could be chosen otherwise. Further, the slope of the line representing the proportion between the amount of crop being processed and the amount of side to side shaking may be flatter or steeper within the same mm/deg limits. Additionally, the proportionate calculation may be linear or non-linear, so that the slope of the line may increase or decrease as the amount of crop being processed increases.

The amount of side to side shaking motion may then be further adjusted by the control system 122 according the amount of side slope on which the combine 10 is currently situated, incrementally or continuously.

Certain crops require different amounts of side to side shaking motion, measured in millimeters of sideways motion per degree (mm/deg) of side slope inclination of the upper sieve 48 and lower sieve 50 of the cleaning system 26, in order for the upper sieve 48 and lower sieve 50 to function properly under various field conditions with a given amount of side slope. Further, certain crops require different amounts of moving air provided by increasing or decreasing the speed of the cleaning fan 52. These requirements for each crop may be optimized through testing the cleaning system 26 with various crops under various field conditions, under various amounts of side slope. The amount of side to side shaking motion and/or the cleaning fan speed may then be set and automatically adjusted based on certain inputs.

The amount of side to side shaking motion and/or cleaning fan speed may, for example, be set according to crop type settings and/or field conditions by allowing an operator to enter the crop type and/or field conditions using the combine monitor 124. For example, these crop type settings and/or field conditions may be selected by the operator from a prepopulated menu of choices on the combine monitor 124, or from auto crop settings saved in the combine monitor. The control system 122 using automatic crop settings then determines an optimum amount of side to side shaking motion and/or cleaning fan speed for that crop type and/or field condition. The optimum amount of side to side shaking motion and/or cleaning fan speed may then be adjusted by the control system 122 according to the amount of side slope on which the combine 10 is currently situated, specific to the needs of that crop type and/or field condition. The amount of side to side shaking motion and/or cleaning fan speed may further be continuously or incrementally adjusted by the control system 122 as the amount of side slope over which the combine 10 passes changes.

Alternatively, the amount of side to side shaking motion and/or cleaning fan speed may be determined automatically by the control system 122 according to the type of header 18 that is attached to the combine 10. The header electrical connection of each type of header 18 may be provided with a unique pin arrangement within the header electrical connection, so that the control system 122 to which the header electrical connection is connected can recognize the type of header 18, such as a corn header, a draper header, an auger header, or a pickup header. In this way, the control system 122 can determine the crop type setting, and then determine an optimum amount of side to side shaking motion and/or cleaning fan speed for that crop type under given field conditions. Alternately, each type of header 18 may be provided with a type of communication device such as an RFID chip (not shown), which allows the control system 122 to thereby recognize the type of header 18 that is attached to the combine 10, and thereby determine the crop type setting. Alternately, the control system 122 may use position sensing technology, such as global positioning systems (GPS), in order to determine the crop type and/or field conditions. Again, the optimum amount of side to side shaking motion and/or cleaning fan speed may then be adjusted by the control system 122 according to the amount of side slope on which the combine 10 is currently situated, specific to the needs of that crop type and/or field condition, and may further be continuously or incrementally adjusted by the control system 122 as the amount of side slope over which the combine 10 passes changes.

## Claims

1. An agricultural harvester (10), comprising:
a chassis (12) carrying a header (18) for gathering a crop, said header (18) removably attached to a feeder housing (20) for feeding the crop into the agricultural harvester (10) to be processed;
a threshing and separating system (24) connected to said feeder housing (20) for separating grain from Material Other than Grain (MOG);
a grain cleaning system (26) connected to said threshing and separating system (24) for further cleaning the separated grain;
said grain cleaning system (26) having at least one sieve (46, 48, 50) operable to oscillate fore and aft;
said grain cleaning system (26) further having a side shaker mechanism (110) operable to produce a side to side shaking motion in said at least one sieve (46, 48, 50); and **characterized in that** said harvester (10) further comprising:
a control system (122) connected to said side shaker mechanism (110) and operable to automatically proportionately increase an amount of said side to side shaking motion as a function of an amount of crop being processed and a type of crop being processed.

2. The agricultural harvester (10) of claim 1, wherein said automatic proportionate increase of said amount of said side to side shaking motion has a linear relationship with the amount of crop being processed.

3. The agricultural harvester (10) of claim 1, wherein said automatic proportionate increase of said amount of said side to side shaking motion has a non-linear relationship with the amount of crop being processed.

4. The agricultural harvester (10) of any one of claims 1-3, wherein: said control system (122) being operable to further automatically adjust said amount of side to side shaking motion on the basis of an amount of side slope upon which the agricultural harvester (10) is situated.

5. The agricultural harvester (10) of any one of claims 1-4, wherein:
configurable parameters of said automatic proportionate increase of said amount of said side to side shaking motion may be entered by an operator using a combine monitor (124) connected to said control system (122).

6. The agricultural harvester (10) of claim 5, wherein said configurable parameters include at least one of:
a minimum amount of said side to side shaking motion;
a maximum amount of said side to side shaking motion;
an amount of crop being processed at which said amount of side to side shaking motion begins to increase;
an amount of crop being processed at which said amount of side to side shaking motion stops increasing; and
a proportion between the amount of crop being processed and said amount of side to side shaking.

7. The agricultural harvester (10) of any one of claims 1-6, wherein: selection may be made by an operator between sets of predefined parameters of said automatic proportionate increase of said amount of said side to side shaking motion using an operator input.

8. A method of controlling an agricultural harvester (10) having a chassis (12) carrying a header (18) for gathering a crop, the header (18) removably attached to a feeder housing (20) for feeding the crop into the agricultural harvester (10), a threshing and separating system (24) connected to the feeder housing (20) for separating grain from MOG, a grain cleaning system (26) connected to the threshing and separating system (24) for further cleaning the separated grain, the grain cleaning system (26) having at least one sieve (46, 48, 50) being operable to oscillate fore and aft, the grain cleaning system (26) further having a side shaker mechanism (110) operable to produce a side to side shaking motion in the at least one sieve (46, 48, 50), **characterized in that** the method further including the steps of:
providing a control system (122) connected to the side shaker mechanism (110); and
automatically proportionately increasing an amount of said side to side shaking motion as a function of an amount of crop being processed and a type of crop being processed.

9. The method of claim 8, wherein said automatic proportionate increase of said amount of said side to side shaking motion has a linear relationship with the amount of crop being processed.

10. The method of claim 8, wherein said automatic proportionate increase of said amount of said side to side shaking motion has a non-linear relationship with the amount of crop being processed.

11. The method of any one of claims 8-10, further comprising the steps of: further automatically adjusting said amount of side to side shaking motion on the basis of an amount of side slope upon which the agricultural harvester (10) is situated.

12. The method of any one of claims 8-11, further comprising the steps of: allowing an operator to enter configurable parameters of said automatic proportionate increase of said amount of said side to side shaking motion using a combine monitor (124) connected to said control system (122).

13. The method of any one of claims 8-12, further comprising the steps of: allowing an operator to select between sets of predefined parameters of said automatic proportionate increase of said amount of said side to side shaking motion using an operator input.

## Patentansprüche

1. Landwirtschaftliche Erntemaschine (10) mit:
einem Fahrgestell (12), das einen Vorsatz (18) zum Aufnehmen von Erntegut trägt, wobei der Vorsatz (18) lösbar an einem Einzugskanal (20) zum Zuführen des zu verarbeitenden Ernteguts in die landwirtschaftliche Erntemaschine (10) befestigt ist;
einem Dresch- und Trennsystem (24), das mit dem Einzugskanal (20) verbunden ist, um Körner von Nichtkornmaterial (Material Other than Grain; MOG) zu trennen;
einem Kornreinigungssystem (26), das mit dem Dresch- und Trennsystem (24) verbunden ist, um das getrennte Korn weiter zu reinigen;
wobei das Kornreinigungssystem (26) mindestens ein Sieb (46, 48, 50) aufweist, das betriebsbereit ist, um sich schnell in Vorwärts-Rückwärts-Richtung hin und herzu bewegen;
wobei das Kornreinigungssystem (26) des Weiteren einen Querschüttelmechanismus (110) aufweist, der betriebsbereit ist, eine seitliche Schüttelbewegung in dem mindestens einen Sieb (46, 48, 50) zu erzeugen; und
**dadurch gekennzeichnet, dass** die Erntemaschine (10) des Weiteren aufweist:
ein Steuerungssystem (122), das mit dem Querschüttelmechanismus (110) verbunden und betriebsbereit ist, um automatisch proportional einen Umfang der seitlichen Schüttelbewegung als eine Funktion einer Menge und einer Art von in Verarbeitung befindlichem Erntegut zu erhöhen.

2. Landwirtschaftliche Erntemaschine (10) nach Anspruch 1, wobei die automatische proportionale Erhöhung des Umfangs der seitlichen Schüttelbewegung eine lineare Beziehung mit der Menge von in Verarbeitung befindlichem Erntegut aufweist.

3. Landwirtschaftliche Erntemaschine (10) nach Anspruch 1, wobei die automatische proportionale Erhöhung des Umfangs der seitlichen Schüttelbewegung eine nicht-lineare Beziehung mit der Menge von in Verarbeitung befindlichem Erntegut aufweist.

4. Landwirtschaftliche Erntemaschine (10) nach einem der Ansprüche 1 bis 3, wobei:
das Steuerungssystem (122) betriebsbereit ist, um weiterhin den Umfang der seitlichen Schüttelbewegung automatisch auf Basis eines Umfangs an seitlicher Neigung einzustellen, in der sich die landwirtschaftliche Erntemaschine (10) befindet.

5. Landwirtschaftliche Erntemaschine (10) nach einem der Ansprüche 1 bis 4, wobei:
konfigurierbare Parameter der automatischen proportionalen Erhöhung des Umfangs der seitlichen Schüttelbewegung durch eine Bedienperson eingegeben werden können, die einen Mähdreschermonitor (124) verwendet, der mit dem Steuerungssystem (122) verbunden ist.

6. Landwirtschaftliche Erntemaschine (10) nach Anspruch 5, wobei die konfigurierbaren Parameter mindestens einen der folgenden umfassen:
einen minimalen Umfang der seitlichen Schüttelbewegung;
einen maximalen Umfang der seitlichen Schüttelbewegung;
eine Menge an in Verarbeitung befindlichem Erntegut, bei der der Umfang der seitlichen Schüttelbewegung anzusteigen beginnt;
eine Menge an in Verarbeitung befindlichem Erntegut, bei der der Umfang der seitlichen Schüttelbewegung anzusteigen aufhört;
ein Verhältnis zwischen der Menge an in Verarbeitung befindlichem Erntegut und dem Umfang der seitlichen Schüttelbewegung.

7. Landwirtschaftliche Erntemaschine (10) nach einem der Ansprüche 1 bis 6, wobei:
eine Auswahl aus Sätzen von vordefinierten Parametern der automatischen proportionalen Erhöhung des Umfangs der seitlichen Schüttelbewegung durch eine Bedienperson unter Verwendung einer Bedieneingabe getätigt werden kann.

8. Verfahren zur Steuerung einer landwirtschaftlichen Erntemaschine (10) mit einem Fahrgestell (12), das einen Vorsatz (18) zum Aufnehmen von Erntegut trägt, wobei der Vorsatz (18) lösbar an einem Einzugskanal (20) zum Zuführen des zu verarbeitenden Ernteguts in die landwirtschaftliche Erntemaschine (10) befestigt ist, einem Dresch- und Trennsystem (24), das mit dem Einzugskanal (20) verbunden ist, um Körner von Nichtkornmaterial (Material Other than Grain; MOG) zu trennen, einem Kornreinigungssystem (26), das mit dem Dresch- und Trennsystem (24) verbunden ist, um das getrennte Korn weiter zu reinigen, wobei das Kornreinigungssystem (26) mindestens ein Sieb (46, 48, 50) aufweist, das betriebsbereit ist, um sich schnell in Vorwärts-Rückwärts-Richtung hin und her zu bewegen, wobei das Kornreinigungssystem (26) des Weiteren einen Querschüttelmechanismus (110) aufweist, der betriebsbereit ist, eine seitliche Schüttelbewegung in dem mindestens einen Sieb (46, 48, 50) zu erzeugen,
**dadurch gekennzeichnet, dass** das Verfahren weiterhin folgende Schritte aufweist:
Bereitstellen eines Steuerungssystems (122), das mit dem Querschüttelmechanismus (110) verbunden ist; und
automatisch proportional Erhöhen eines Umfangs der seitlichen Schüttelbewegung als eine Funktion einer Menge und einer Art von in Verarbeitung befindlichem Erntegut.

9. Verfahren nach Anspruch 8, wobei die automatische proportionale Erhöhung des Umfangs der seitlichen Schüttelbewegung eine lineare Beziehung mit der Menge von in Verarbeitung befindlichem Erntegut aufweist.

10. Verfahren nach Anspruch 8, wobei die automatische proportionale Erhöhung des Umfangs der seitlichen Schüttelbewegung eine nicht-lineare Beziehung mit der Menge von in Verarbeitung befindlichem Erntegut aufweist.

11. Verfahren nach einem der Ansprüche 8-10, das des Weiteren folgende Schritte aufweist:
weiterhin automatisch den Umfang der seitlichen Schüttelbewegung auf Basis eines Umfangs an seitlicher Neigung einzustellen, in der sich die landwirtschaftliche Erntemaschine (10) befindet.

12. Verfahren nach einem der Ansprüche 8-11, das des Weiteren folgende Schritte aufweist:
Ermöglichen einer Bedienperson, konfigurierbare Parameter der automatischen proportionalen Erhöhung des Umfangs der seitlichen Schüttelbewegung einzugeben, die einen Mähdreschermonitor (124) verwendet, der mit dem Steuerungssystem (122) verbunden ist.

13. Verfahren nach einem der Ansprüche 8-12, das des Weiteren folgende Schritte aufweist:
Ermöglichen einer Bedienperson, zwischen Sätzen von vordefinierten Parametern der automatischen proportionalen Erhöhung des Umfangs der seitlichen Schüttelbewegung unter Verwendung einer Bedieneingabe auszuwählen.

## Revendications

1. Moissonneuse agricole (10) comprenant:
un châssis (12) supportant une tête de récolte (18) pour collecter des matières récoltées, ladite tête de récolte (18) reliée de manière amovible à un logement alimenteur (20) pour acheminer les matières récoltées dans la moissonneuse agricole (10) afin d'y être transformées;
un système de battage et de séparation (24) connecté au dit logement alimenteur (20) pour séparer les grains du matériau autre que le grain (MOG);
un système de nettoyage du grain (26) connecté audit système de battage et de séparation (24) pour nettoyer le grain séparé;
ledit système de nettoyage du grain (26) doté d'au moins un tamis (46, 48, 50) pouvant être utilisé pour osciller de l'avant vers l'arrière;
ledit système de nettoyage du grain (26) doté en outre d'un mécanisme de secousse d'un côté à l'autre (110) pouvant être utilisé pour produire un mouvement de secousse d'un côté à l'autre dans ledit au moins un tamis (46, 48, 50);
et **caractérisé en ce que** ladite moissonneuse (10) comprend en outre:
un dispositif de commande (122) relié audit mécanisme de secousse d'un côté à l'autre (110) et pouvant être utilisé pour augmenter automatiquement proportionnellement une quantité de mouvements de secousse d'un côté à l'autre en fonction de la quantité de matières récoltées transformées et du type de matières récoltées transformées.

2. Moissonneuse agricole (10) selon la revendication 1, dans laquelle ladite augmentation automatique et proportionnelle de ladite quantité de mouvements de secousse d'un côté à l'autre a un rapport linéaire avec la quantité de matières récoltées transformées.

3. Moissonneuse agricole (10) selon la revendication 1, dans laquelle ladite augmentation automatique et proportionnelle de ladite quantité de mouvements de secousse d'un côté à l'autre a un rapport non linéaire avec la quantité de matières récoltées transformées.

4. Moissonneuse agricole (10) selon l'une quelconque des revendications 1 à 3, dans laquelle:
ledit dispositif de commande (122) peut en outre être utilisé pour adapter automatiquement la quantité de mouvements de secousse d'un côté à l'autre sur la base du degré d'inclinaison latérale où se situe la moissonneuse agricole (10).

5. Moissonneuse agricole (10) selon l'une quelconque des revendications 1 à 4, dans laquelle:
les paramètres configurables de ladite augmentation automatique et proportionnelle de ladite quantité de mouvements de secousse d'un côté à l'autre latéral peuvent être introduits par un opérateur utilisant un écran de moissonneuse-batteuse (124) relié audit dispositif de commande (122).

6. Moissonneuse agricole (10) selon la revendication 5, dans laquelle lesdits paramètres configurables comprennent au moins:
une quantité minimale de mouvements de secousse d'un côté à l'autre;
une quantité maximale de mouvements de secousse d'un côté à l'autre;
une quantité de matières récoltées transformées pour laquelle ladite quantité de mouvements de secousse d'un côté à l'autre commence à augmenter;
une quantité de matières récoltées transformées pour laquelle ladite quantité de mouvements de secousse d'un côté à l'autre arrête d'augmenter; et
une proportion entre la quantité de matières récoltées transformées et ladite quantité de mouvements de secousse d'un côté à l'autre.

7. Moissonneuse agricole (10) selon l'une quelconque des revendications 1 à 6, dans laquelle:
un opérateur peut faire une sélection parmi des ensembles de paramètres prédéfinis de ladite augmentation automatique et proportionnelle de ladite quantité de mouvements de secousse d'un côté à l'autre sur la base d'une entrée de l'opérateur.

8. Méthode de commande d'une moissonneuse agricole (10) doté d'un châssis (12) soutenant une tête de récolte (18) pour collecter des matières récoltées, la tête de récolte (18) étant reliée de manière amovible à un logement alimenteur (20) pour acheminer les matières récoltées dans la moissonneuse agricole (10), un système de battage et de séparation (24) relié au logement alimenteur (20) pour séparer le grain du MOG, un système de nettoyage du grain (26) relié au système de battage et de séparation (24) pour nettoyer le grain séparé, le système de nettoyage du grain (26) ayant au moins un tamis (46, 48, 50) utilisable pour osciller de l'avant vers l'arrière, le système de nettoyage du grain (26) ayant en outre un mécanisme de secousse d'un côté à l'autre (110) pour produire un mouvement de secousse d'un côté à l'autre dans au moins un tamis (46, 48, 50), **caractérisée en ce que** la méthode comprend en outre les étapes consistant à:
fournir un dispositif de commande (122) relié au mécanisme de secousse d'un côté à l'autre (110) ; et à
augmenter automatiquement et proportionnellement une quantité desdits mouvements de secousse d'un côté à l'autre en fonction d'une quantité de matières récoltées transformées et d'un type de matières récoltées transformées.

9. Méthode selon la revendication 8, dans laquelle l'augmentation automatique et proportionnelle de ladite quantité desdits mouvements de secousse d'un côté à l'autre a un rapport linéaire avec la quantité de matières récoltées transformées.

10. Méthode selon la revendication 8, dans laquelle ladite augmentation automatique et proportionnelle de ladite quantité desdits mouvements de secousse d'un côté à l'autre a un rapport non linéaire avec la quantité de matières récoltées traitées.

11. Méthode selon l'une quelconque des revendications 8 à 10, comprenant en outre les étapes consistant à:
adapter automatiquement ladite quantité de mouvements de secousse d'un côté à l'autre sur la base d'un degré d'inclinaison latérale où se situe la moissonneuse agricole (10).

12. Méthode selon l'une quelconque des revendications 8 à 11, comprenant en outre les étapes consistant à:
permettre à un opérateur d'introduire des paramètres configurables de ladite augmentation automatique et proportionnelle de ladite quantité desdits mouvements de secousse d'un côté à l'autre utilisant un écran d'une moissonneuse-batteuse (124) relié audit système de commande (122).

13. Méthode selon l'une quelconque des revendications 8 à 12, comprenant en outre les étapes consistant à:
permettre à un opérateur de sélectionner parmi des ensembles de paramètres prédéfinis de ladite augmentation automatique et proportionnelle de ladite quantité desdits mouvements de secousse d'un côté à l'autre sur la base d'une entrée de l'opérateur.
